# EUROPÄISCHE PATENTSCHRIFT

(11) **EP 1 452 360 B1**
(45) Veröffentlichungstag und Bekanntmachung des Hinweises auf die Patenterteilung: **02.07.2008**
(21) Anmeldenummer: 04002180.0
(22) Anmeldetag: 30.01.2004
(51) Int. Cl.: B60J 5/00, G05B 19/4061

(54) **Verfahren zum Erkennen eines Gegenstandes in einer Türöffnung eines Fahrzeuges**
Process for detecting objects in a vehicle door opening
Procédé de détection d'objets dans l'ouverture d'une porte de véhicule

(30) Priorität: 28.02.2003 DE 10308878
(43) Veröffentlichungstag der Anmeldung: 01.09.2004
(73) Patentinhaber: SIEMENS AKTIENGESELLSCHAFT, 80333 München (DE); Fraba Vitector GmbH, 51063 Köln (DE)
(72) Erfinder: Güte, Andreas, 51149 Köln (DE); Rohrmoser, Frank, 91352 Hallerndorf (DE); Szepanski, Peter Arkadius, 91352 Hallerndorf (DE)
(74) Vertreter: Maier, Daniel Oliver

(56) Entgegenhaltungen:
- CH-A5- 688 354
- DE-C1- 19 934 880
- GB-A- 2 307 758
- JP-A- 10 250 375
- JP-A- 11 210 320
- JP-A- 2001 184 129
- JP-A- 2001 260 654
- US-A1- 2003 005 775
- US-A1- 2003 030 299
- US-B1- 6 208 102
- US-B1- 6 297 605

## Beschreibung

Die Erfindung betrifft ein Verfahren zum Erkennen eines Gegenstandes in einer Türöffnung eines Fahrzeuges, wobei dann, wenn in einer Sensorik ein empfangenes Signal von einem Sollwert abweicht, eine Fahrzeugreaktion ausgelöst wird.

Bei Fahrzeugen, z.B. bei Bussen, aber auch bei Schienenfahrzeugen, ist es üblich, die Türen im Schließbereich mit einem elastischen Profil auszustatten, dass eingeklemmte Personen oder Gegenstände vor Verletzungen oder Beschädigungen schützt , siehe z.B. DE-C-199 34 880. Es sind auch schon Verfahren vorgeschlagen worden, die geeignet sind, eine in der Tür eingeklemmte Person oder einen eingeklemmten Gegenstand zu erkennen und eine geeignete Fahrzeugreaktion auszulösen. Eine geeignete Reaktion ist z.B. neben dem sofortigen Öffnen der Tür eine Meldung beim Fahrzeugführer oder sogar eine Unterbrechung der Stromzufuhr zum Antrieb.

Zur Durchführung eines solchen Verfahrens ist besonders eine Vorrichtung geeignet, bei der das elastische Profil hohl ist und das Signal in dem so gebildeten Hohlraum entlang läuft. Dazu dienen in der Regel ein Sender und ein Empfänger an gegenüberliegenden Enden des Hohlraumes. Geeignete Signale sind Ultraschall oder elektromagnetische Wellen, insbesondere Licht.

Es ist auch bekannt, in dem elastischen Profil eine elektrische Kontaktleiste anzuordnen, die zwei gegeneinander bewegliche elektrisch leitende Streifen aufweist. Wenn eine Person oder ein Gegenstand in der Tür eingeklemmt ist, berühren sich diese Streifen, wodurch ein Signal erzeugt wird, das einen Einklemmvorgang meldet. Bei einer solchen Vorrichtung findet aber kein Vergleich zwischen einem empfangenen Signal und einem Sollwert statt.

Nach der gültigen Normgebung sollen alle Verfahren und Vorrichtungen zum Erkennen eines Gegenstandes, die in einer Tür eingeklemmt sind, in der Lage sein, Gegenstände mit 30 mm x 60 mm Querschnitt zu erkennen.

Es kann jedoch vorkommen, dass dünnere Gegenstände, wie z.B. ein Kleidungsstück oder ein Gürtel, eingeklemmt werden, was insbesondere dann, wenn sich die betroffene Person außerhalb des Fahrzeuges befindet, sehr gefährlich ist. Falls das Fahrzeug eine fahrerlos betriebene U-Bahn ist, ist die Gefährdung von Personen besonders groß, da keine Überwachung des Bahnsteigs durch Personal mehr erfolgt.

Der Erfindung liegt die Aufgabe zugrunde, ein Verfahren zum Erkennen eines Gegenstandes in einer Türöffnung eines Fahrzeuges sowie zur Auswertung der Messungen anzugeben, die zuverlässig auch sehr dünne eingeklemmte Gegenstände zu erkennen gestatten. Außerdem sollen bleibende Veränderungen an der Türkante, wie z.B. Schmutzpartikel oder auch eine falsche Schließlage der Türblätter nicht zu einer Fahrzeugreaktion führen. Insbesondere sollen Meldungen ignoriert werden, die auf einen eingeklemmten Gegenstand oder eine eingeklemmte Person hinweisen, falls die betreffende Tür nicht kurz vorher geschlossen worden ist.

Die Aufgabe wird gemäß der Erfindung dadurch gelöst, dass bei geschlossener Tür nach dem Anfahren ein aktualisierter Sollwert ermittelt wird.

Es wird der Vorteil erzielt, dass bleibende Veränderungen an der Tür nicht zu fortlaufenden Meldungen und somit zu ungerechtfertigten Fahrzeugreaktionen führen. Falls ein Türsystem eine relativ große Schließungenauigkeit hat, was im Laufe des Betriebes infolge von Abnutzung oder auch infolge von Einstellungstoleranzen passieren kann, führen solche Ungenauigkeiten nicht zu ungerechtfertigten Meldungen. Das wird dadurch erreicht, dass nach dem Schließen der Tür und nach dem anschließenden Anfahren einige Zeit später, wenn das Fahrzeug bereits eine relativ hohe Geschwindigkeit erreicht hat, eine Messung durchgeführt wird, die einen aktualisierten Sollwert bereit stellt. Die bleibende Veränderung wird also damit als Sollzustand festgeschrieben. Eine bleibende Veränderung, die als nicht gefährlich angesehen wird, kann ein fest an der Tür anhaftender Fremdkörper sein, aber auch jede bleibende Verformung des elastischen Profils oder jede mögliche Schließungenauigkeit der Türen, z.B. durch eine sogenannte schiefe Schließlage.

Beispielsweise wird eine Fahrzeugreaktion nur in einer Zeitspanne zwischen dem Schließen der Tür und dem Ende einer kundenspezifisch gewählten Zeitspanne ausgelöst, die mit dem nächsten Anfahren des Fahrzeuges nach dem Schließen der Tür beginnt.

Damit wird der Vorteil erzielt, dass deutlich weniger Fehlmeldungen vorkommen. Einerseits ist es ausgeschlossen, dass eine Manipulation an einer Tür, die überhaupt nicht geöffnet gewesen war, eine Meldung auslösen kann und andererseits wird auch nach dem Schließen der Tür der Überwachungszeitraum begrenzt. Es ist nämlich nicht mehr notwendig, dann, wenn das Fahrzeug eine hohe Geschwindigkeit erreicht hat, einen eingeklemmten Gegenstand oder eine eingeklemmte Person zu erkennen. Das Erkennen erfolgt vielmehr während das Fahrzeug steht oder spätestens innerhalb einer kundenspezifisch gewählten Zeitspanne nach dem Anfahren. Diese Zeitspanne ist so zu wählen, dass das Fahrzeug in dieser Zeitspanne noch keine hohe Geschwindigkeit erreicht haben kann, so dass ein Schaden noch zu verhindern ist. Je nach Kunden ist diese Zeitspanne z.B. zwischen vier Sekunden und zwölf Sekunden lang.

Es werden also Verspätungen beim Betrieb des Fahrzeuges vermieden, da Fehlmeldungen weitgehend ausgeschlossen sind.

Bei einer lernfähigen Sensorik wird in einem Kalibrierungsprozess von einer Auswerteeinheit die Leistung eines Senders der Sensorik kontinuierlich verändert, bis das empfangene Signal eine gewünschte Qualität hat. Dieses empfangene Signal dient dann als Sollwert.

Mit diesem als solchen bekannten Kalibrierungsprozess wird sichergestellt, dass die Sensorik funktionstüchtig ist und dass der Sollwert nicht zu groß angenommen wird. Bei zu hoher Sendeleistung und damit zu hohem Sollwert wäre das Verfahren nämlich nicht ausreichend genau durchführbar. Es würden nur relativ dicke Gegenstände erkannt.

Nach einer vorteilhaften Weiterbildung des Verfahrens nach der Erfindung ist vorgesehen, dass, nachdem die Tür während einer Haltezeitspanne geschlossen worden ist, um mindestens eine kundenspezifisch gewählte Zeitspanne nach dem auf diese Haltezeitspanne folgenden nächsten Anfahren des Fahrzeugs, die Sensorik durch die Auswerteeinheit deaktiviert und nach kurzer Zeit wieder aktiviert wird, um in einem neuen Kalibrierungsprozess eine Ermittlung eines aktualisierten Sollwertes auszulösen.

Es wird damit der besondere Vorteil erzielt, dass bleibende Veränderungen, die sich nach einem Öffnen und Schließen der Tür einstellen, nicht im weiteren Fahrbetrieb zu einer Fahrzeugreaktion führen können. Durch die Ermittlung eines aktualisierten Sollwertes wird jeweils der Zustand, der sich nach der Anfahrphase während der Fahrt ergibt, als Sollzustand der Türen gewertet. Vorteilhafterweise werden also bleibende Veränderungen wie ein Verschleiß an den Türen oder festhaftende Fremdkörper an der Tür nicht mehr registriert und können nicht zu Fehlmeldungen führen.

Das Signal ist beispielsweise eine in einem Hohlraum verlaufende Welle, wobei sich der Hohlraum in einem elastischen Profil befindet, das die Schließfläche der Türöffnung begrenzt. Ein solcher Hohlraum ist ein besonders geeigneter Ort zur Ausbreitung eines Signales, das eine Einklemmsituation erkennen soll. Bei einem eingeklemmten Gegenstand wird nämlich das elastische Profil deformiert und der Hohlraum wird verengt.

Sender und Empfänger der Sensorik sind im Hohlraum beispielsweise schräg zur Längsachse ausgerichtet. Die Signale gelangen bei unverändertem Hohlraum nach mehrfacher Reflexion an der Begrenzungswand des Hohlraumes vom Sender zum Empfänger. Schon eine kleine Veränderung der Form der Begrenzungswand infolge eines eingeklemmten Gegenstandes verändert den Signalverlauf und lässt die Signale nicht vollständig zum Empfänger gelangen. Das Verfahren ist dadurch besonders empfindlich und kann sehr dünne eingeklemmte Gegenstände zuverlässig erkennen.

Beispielsweise ist das Signal ein Ultraschallsignal und das Material des Profils kann Schallwellen reflektieren.

Nach einem anderen Beispiel besteht das Signal aus elektromagnetischen Wellen, beispielsweise aus Licht, und das Material des Profils kann solche elektromagnetischen Wellen reflektieren.

Die Auswerteeinheit ist beispielsweise über einen Bus mit dem Sender zur Leistungsregelung verbunden.

Mit dem Verfahren nach der Erfindung wird insbesondere der Vorteil erzielt, dass selbst nicht genau justierte Türen, aber auch festklebende Fremdkörper keine Fehlmeldung auslösen können. Es ist also weniger Aufwand für die Justierung der Türen erforderlich. Die Schließflächen müssen nicht genau parallel verlaufen. Ohne aufwendige Wartungsarbeiten können selbst dünne eingeklemmte Gegenstände stets zuverlässig erkannt werden.

Das Verfahren zum Erkennen eines Gegenstandes in einer Türöffnung eines Fahrzeuges wird anhand der Zeichnung näher erläutert:
FIG 1 zeigt in einem Schema den Verlauf einer Fahrt, registrierte Ereignisse, die auf einen eingeklemmten Körper zurückzuführen sein könnten, sowie die daraus folgenden Fahrzeugreaktionen und den Aktivierungszustand der Sensorik.
FIG 2 zeigt eine geeignete Vorrichtung zur Durchführung des Verfahrens in einem Querschnitt.
FIG 3 zeigt schematisch den Verlauf einer Welle in einem Hohlraum eines Profils.

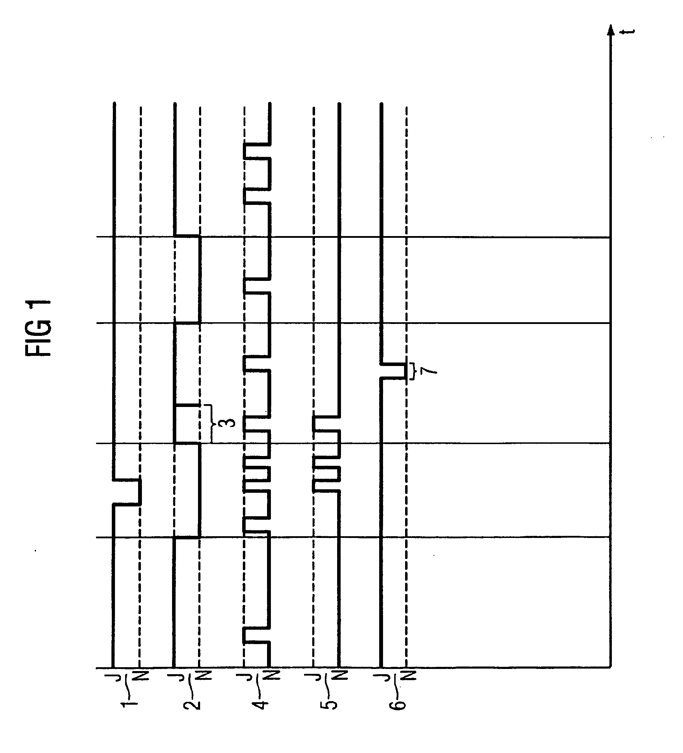

In Figur 1 ist die Abszisse die Zeitachse. Die einzelnen Abläufe, die untereinander gleichzeitig erfolgen, haben jeweils entweder die Position J oder N. J steht für "Ja" oder "Zutreffend" und N steht für "Nein" oder "Nicht zutreffend". Der erste Verlauf 1 zeigt, ob die Tür geschlossen ist. Der zweite Verlauf 2 zeigt, ob das Fahrzeug fährt. Im zweiten gezeigten Zeitabschnitt steht also das Fahrzeug und innerhalb dieses Zeitabschnittes ist die Tür zeitweilig geöffnet. Immer wenn während des Anhaltens die Tür geöffnet war, ist eine kundenspezifisch gewählte Zeitspanne 3 festgelegt. Der dritte Verlauf 4 zeigt beliebige Ereignisse an, die ein Einklemmvorgang in der Tür sein könnten. Sie sind beispielsweise auch darauf zurückzuführen, dass Personen während der Fahrt die Tür und insbesondere das elastische Profil an der Tür berühren.

Der vierte Verlauf 5 zeigt an, welche Ereignisse des dritten Verlaufes 4 dazu führen, dass eine Fahrzeugreaktion ausgelöst wird. Diese Fahrzeugreaktion kann nur ein Signal an dem Fahrzeugführer sein, sie kann aber auch, insbesondere bei einem fahrerlosen Betrieb einer U-Bahn, bedeuten, dass der Antrieb abgeschaltet wird. Ein solche Fahrzeugreaktion wird nur bei geöffneter Tür und danach bis zum Anfahren und außerdem noch für eine kundenspezifisch gewählte Zeitspanne 3 nach dem Anfahren zugelassen. Diese Zeitspanne 3 ist im zweiten Verlauf 2 zu sehen. Es wird somit eine Fahrzeugreaktion 5 auf die relevante Zeit vom Öffnen der Tür bis zum Ende der Anfahrtsphase des Fahrzeugs nach dem Schließen der Tür begrenzt. Zu jeder anderen Zeit ist eine Reaktion auf eine Messung am Sensor nicht erforderlich.

Um den Sollwert, mit dem ein empfangenes Signal verglichen wird, bleibenden Veränderungen an der Tür stets anzupassen, wird die gesamte Sensorik, wie der fünfte Verlauf 6 zeigt, nach jedem Schließen der Tür, wenn das Fahrzeug seine übliche Geschwindigkeit wieder erreicht hat, kurzzeitig deaktiviert 7. Da es üblich ist, dass die Sensorik als Sollwert stets den kleinsten Wert einstellt, bei dem ein Empfänger das Sendesignal grade noch registriert, ist es erforderlich, diesen Prozess nach jedem Schließen erneut zu starten, damit bleibende Veränderungen an der Tür vom Sollwert berücksichtigt sind. Solche bleibenden Veränderungen können festklebende Fremdkörper im Schließbereich sein oder auch eine verschleißbedingte Schrägstellung der Türen.

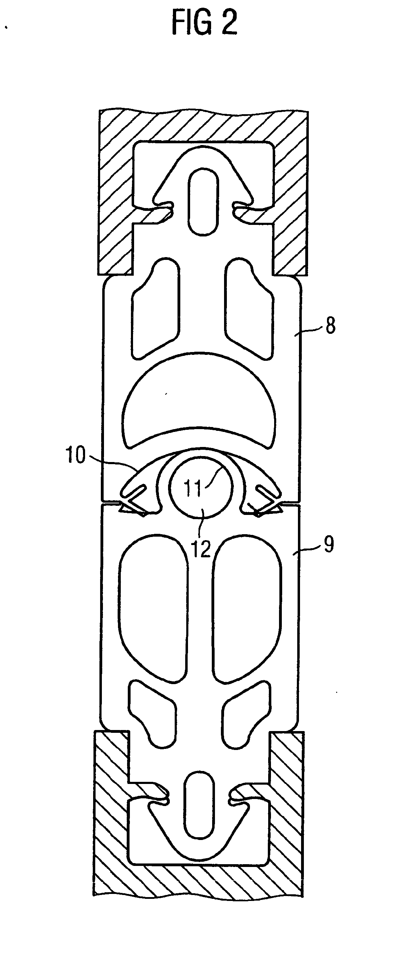

Zur Durchführung des Verfahrens besonders geeignete Türprofile 8 und 9 sind in Figur 2 gezeigt. Diese elastischen Profile 8 und 9 sind zwei Türen zugeordnet. Diese Türen schließen, indem die beiden Profile 8 und 9 aneinandergepresst werden. Es kann sich dabei um Kipptüren oder um Schiebetüren handeln.

Das erste elastische Profil 8 weist an seiner Stirnfläche eine Ausnehmung 10 auf, in deren Bereich eine Anformung 11 des zweiten Profils 9 bei geschlossenen Türen anliegt. In der Anformung 11 befindet sich ein senkrecht verlaufender Hohlraum 12. In diesem Hohlraum 12 sind ein Sender 13 und ein Empfänger 14 für elektromagnetische Wellen angeordnet.

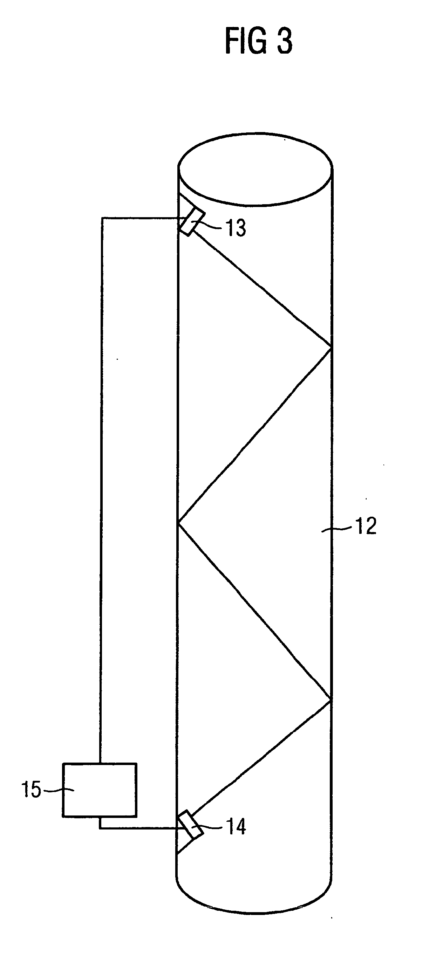

In Figur 3 ist schematisch der Hohlraum 12 als das Innere eines Zylinders dargestellt. Dort befindet sich der Sender 13 im oberen Bereich des Hohlraumes 12. Vom Sender 13 gehen Wellen aus, die an der Innenoberfläche des Hohlraumes 12 mehrfach reflektiert werden, bis sie den Empfänger 14 erreichen. Schon infolge einer geringen Deformation des Hohlraumes 12 durch einen zwischen den Profilen 8 und 9 eingeklemmten Gegenstand wird die Reflexion der elektromagnetischen Welle verändert und es wird nur ein abgeschwächtes Signal am Empfänger 14 empfangen. Der Sender 13 und der Empfänger 14 sind mit einer Auswerteeinheit 15 verbunden, in der das empfangene Signal mit einem aktuellen Sollwert verglichen wird.

## Patentansprüche

1. Verfahren zum Erkennen (4) eines Gegenstandes in einer Türöffnung eines Fahrzeuges, wobei dann, wenn in einer Sensorik ein empfangenes Signal von einem Sollwert abweicht, eine Fahrzeugreaktion (5) ausgelöst wird,
**dadurch gekennzeichnet , dass** bei geschlossener Tür (1) nach dem Anfahren (2) ein aktualisierter Sollwert ermittelt wird.

2. Verfahren nach Anspruch 1,
**dadurch gekennzeichnet , dass** eine Fahrzeugreaktion (5) nur ausgelöst wird in einer Zeitspanne zwischen dem Schließen (1) der Tür und dem Ende einer kundenspezifisch gewählten Zeitspanne (3), die mit dem nächsten Anfahren (2) des Fahrzeugs nach dem Schließen der Tür beginnt.

3. Verfahren nach einem der Ansprüche 1 oder 2, wobei bei lernfähiger Sensorik in einem Kalibrierungsprozess von einer Auswerteeinheit (15) die Leistung eines Senders (13) der Sensorik kontinuierlich verändert wird, bis das empfangene Signal eine gewünschte Qualität hat und wobei dieses empfangene Signal als Sollwert dient,
**dadurch gekennzeichnet , dass**, nachdem die Tür während einer Haltezeitspanne geschlossen worden ist (1), um mindestens eine kundenspezifisch gewählte Zeitspanne (3) nach dem auf diese Haltezeitspanne folgenden Anfahren (2) des Fahrzeugs die Sensorik durch die Auswerteeinheit (15) deaktiviert (6) und nach kurzer Zeit (7) wieder aktiviert (6) wird, um in einem neuen Kalibrierungsprozess eine Ermittlung eines aktualisierten Sollwertes auszulösen.

4. Verfahren nach einem der Ansprüche 1 bis 3,
**dadurch gekennzeichnet , dass** das Signal eine in einem Hohlraum (12) verlaufende Welle ist und dass sich der Hohlraum (12) in einem elastischen Profil (9) befindet, das die Schließfläche der Türöffnung begrenzt.

## Claims

1. Method for detecting (4) an object in a door opening of a vehicle, a vehicle reaction (5) being triggered if a received signal deviates from a setpoint value in a sensor system, **characterized in that**, when the door (1) is closed, an updated setpoint value is determined after the vehicle drives off (2).

2. Method according to Claim 1, **characterized in that** a vehicle reaction (5) is triggered only in a time period between the closing (1) of the door and the end of a time period (3) which is selected in a customer-specific fashion and which starts when the vehicle next drives off (2) after the door closes.

3. Method according to one of Claims 1 or 2, in which, when there is a sensor system which is capable of learning, the power of a transmitter (13) of the sensor system is continuously changed by an evaluation unit (15) in a standardization process until the received signal has a desired quality, this received signal serving as a setpoint value, **characterized in that** after the door has been closed (1) during a hold time, the sensor system is deactivated (6) by the evaluation unit (15) for at least a customer-specifically selected time period (3) after the vehicle drives off (2) following this hold time, and re-activated (6) again after a short time (7) in order to trigger a determination of an updated setpoint value in a new standardization process.

4. Method according to one of Claims 1 to 3, **characterized in that** the signal is a wave which propagates in a cavity (12), and **in that** the cavity (12) is located in an elastic section (9) which bounds the closing surface of the door opening.

## Revendications

1. Procédé de détection (4 ) d' un objet dans une ouverture de la portière d' un véhicule dans lequel, lorsque, dans un système de détection, un signal reçu s' écarte d' une valeur de consigne, il est déclenché une réaction (5 ) du véhicule,
**caractérisé en ce que**, alors que la portière (1 ) est fermée, on détermine, après le démarrage (2 ), une valeur de consigne mise à jour.

2. Procédé suivant la revendication 1,
**caractérisé en ce que** l' on ne déclenche une réaction (5 ) du véhicule que dans un laps de temps compris entre la fermeture (1 ) de la portière et la fin d' un laps de temps (3 ) sélectionné spécifiquement par le client et commençant avec le démarrage (2 ) du véhicule suivant immédiatement la fermeture de la portière.

3. Procédé suivant 1' une des revendications 1 ou 2, dans lequel, pour un système de détection susceptible d' apprentissage, on modifie continuellement dans un processus d' étalonnage, par une unité (15 ) d' exploitation, la puissance d' un émetteur (13 ) du système de détection jusqu' à ce que le signal reçu ait une qualité souhaitée et dans lequel ce signal reçu sert de valeur de consigne,
**caractérisé en ce que**, après que la portière a été fermée, pendant un laps de temps d' arrêt, pour au moins un laps de temps (3 ) sélectionné spécifiquement au client après le démarrage (2 ) du véhicule faisant suite au laps de temps d' arrêt, le système de détection est désactivé (6 ) par l' unité (15 ) d' exploitation et réactivé (6 ) après peu de temps (7 ) pour déclencher dans un nouveau procédé d' étalonnage une détermination d' une valeur de consigne mise à jour.

4. Procédé suivant 1' une des revendications 1 à 3,
**caractérisé en ce que** le signal est une onde s' étendant dans une cavité (12 ) et **en ce que** la cavité (12 ) se trouve dans un profilé (9 ) élastique qui délimite la surface de fermeture de 1' ouverture de la portière.
